# EUROPEAN PATENT SPECIFICATION

(11) **EP 0 762 523 B1**
(45) Date of publication and mention of the grant of the patent: **10.11.1999**
(21) Application number: 96113546.4
(22) Date of filing: 23.08.1996
(51) Int. Cl.: H01M 4/58, C01B 31/00

(54) **Carbon active material for a negative electrode of a lithium secondary battery and a battery thereof**
Aktives Kohlenstoffmaterial für eine negative Elektrode einer Lithium-Sekundärbatterie und Batterie
Matériau actif en carbone pour une électrode négative d'une pile secondaire au lithium et pile

(30) Priority: 25.08.1995 JP 24080395; 08.08.1996 JP 22603996
(43) Date of publication of application: 12.03.1997
(73) Proprietor: FURUKAWA DENCHI KABUSHIKI KAISHA, Yokohama-shi, Kanagawa-ken (JP)
(72) Inventor: Tanno, Satoshi, c/o Furukawa Denchi K.K., Iwaki-shi, Fukushima-ken (JP)
(74) Representative: Schmidt-Evers, Jürgen, Dipl.-Ing.

(56) References cited:
- EP-A- 0 474 183
- US-A- 5 344 724
- CHEMICAL ABSTRACTS, vol. 98, no. 12, 21 March 1983 Columbus, Ohio, US; abstract no. 92235, SANDERS, J. ET AL: "The structure of carbon deposits on HDS catalysts" XP002020185 & APPLIED CATALYSIS, vol. 51, no. 1, 1983, pages 65-84,

## Description

### Technical Field:

This invention relates to an active material for a negative electrode for a lithium secondary battery and a lithium secondary battery and a method of manufacturing an active material.

### Background Art:

Recently, there has been made a remarkable improvement in performance of electronic instruments such as notebook personal computers, cordless telephones, portable telephones and the like and also miniaturization, reducing in weight, and higher performances thereof have been progressed. With the progress thereof, there has been raised, as a battery using as a power source for these instruments, the requirement for development of any rechargeable seondary battery which is smaller in size, lighter in weight and higher in performance, and as a result there have been developed lead-acid storage batteries, alkaline storage batteries, etc, as a conventional typical secondary battery.

However, in order to meet the above-mentioned requirements, there have been actively conducted researches concerning a lithium secondary battery with high output and high energy density.

As active materials for the negative electrode of the lithium secondary battery, there has been used metallic lithium, lithium alloys, carbonaceous materials, graphite materials, etc.

When metallic lithium or lithium alloy is used as the active material for the negative electrode of the lithium secondary battery, there are involved such problems that lithium ions produced by dissolving lithium in a non-aqueous electrolyte at the time of discharging are deposited at the time of charging and at that time are reacted with the electrolyte, wherein a part thereof is inactivated, and dendrites of lithium are generated and grown, resulting in deterioration of the negative electrode.

In the case of using as an active material for the negative electrode any kind of carbonaceous materials obtained by burning a starting material such as coal tar, pitch, carbohydrate, furfuryl alcohol resin, etc. at about 1000 °C a deterioration of the negative electrode caused by the deposition of lithium dendrites is reduced, but it has such a defect that the flatness of an electric potential at the initial stage of the charge and discharge cycles is bad.

In case of using as an active material for the negative electrolyte any kind of graphite material obtained by heating an easy graphitizing carbonaceous material such as coal coke or various kinds of cokes, pitch, mesophasecarbon, gaseous phase growth carbon, etc. (at about 2000°C), the electric flatness is excellent, but it has such a defect that a lot of lithium is consumed due to the irreversible reaction made at the time of charging of the first charge and discharge cycle and as a result the irreversible capacity, i.e., a capacity loss, is increased.

From EP 0 474 183 A2, active materials according to the preamble of claim 1 are known, wherein these active materials comprise graphite materials having turbostratic structures and are used for a negative electrode.

### Disclosure of the Invention:

A purpose of the present invention is to provide an active material for a negative electrode for a lithium secondary battery that is free from the above mentioned defects of the conventional lithium secondary batteries and brings about a lithium secondary battery which is excellent in flatness of the electric potential and is also decreased in the irreversible capacity, i.e., capacity loss at the initial stage of the charge and discharge cycles, resulting in a high capacity.

This problem is solved by an active material as defined in claim 1. This active material is manufactured by a method according to claim 2 and used in a lithium secondary battery according to claim 5. The dependent claims describe preferred embodiments of the invention.

For manufacturing the active material, the burning temperature in the graphitizing of the fluid coke is preferably more than 2000°C, and thereby the carbon material having the above mentioned structures can be obtained favorably, and more preferable burning temperature is more than 2500°C. Furthermore, another purpose of the present invention is to provide a lithium secondary battery which is provided with a negative electrode made by using such an active material for the negative electrode as mentioned above, i.e., the carbon material having the plane structure and the turbostratic structure obtained by subjecting fluid coke to a graphitization treatment.

### Brief Description of the Drawings:

Fig. 1 shows a schematic sectional view of a particle of the carbon material composed of the layer structure and the turbostratic structure obtained by graphitization of the fluid coke according to one embodying example of the present invention.

Fig. 2 is a sectional view of a test cell using the active material according to one example of the present invention.

Fig. 3 is a comparison diagram showing the initial charge and discharge characteristics of a test cell using the active material according to one example of the present invention and test cells using the active materials for comparison.

Fig. 4 is a comparison diagram showing the relationship between test cells and the burning temperatures in the case of graphitization of the fluid coke.

### Detailed Description of the Invention:

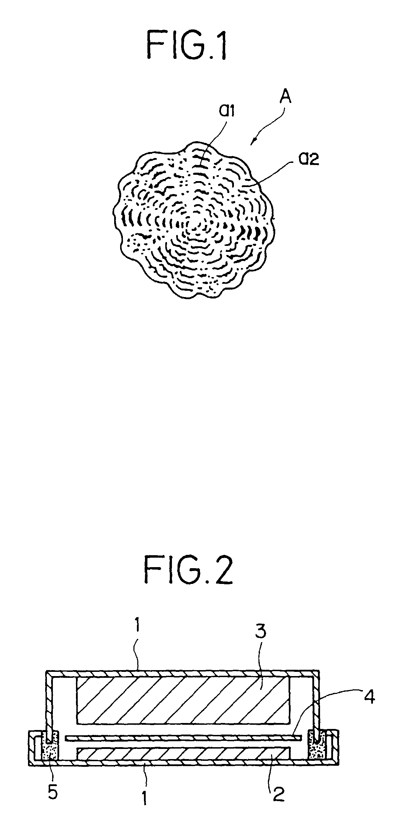

The present invention is characterized in that especially fluid coke, i.e., petroleum coke made by fluid coking process, is used as a raw material, and it is subjected to graphitizing treatment preferably at burning temperature of about 2000°C or higher, more preferably about more than 2500°C, for instance, in the range of 2500°C to 3000°C, so that there is obtained the carbon material, which comprises a mass of particles whose particle is composed of a layer structure a1, in which the lattice planes are stacked one with another, each of which is formed in such a manner that a lattice plane formed by linking a lot of a regular hexagonal ring of carbon atoms of the graphite in the same plane and a turbostratic structure a2 formed by disordering these stacked lattice layers, resulting in giving a crysanthemum flower-like appearance, as shown in Fig. 1 and that the active material for the negative electrode thus obtained above is used as an active material for the negative electrode of the lithium secondary battery.

A lithium secondary battery according to the present invention is not different in its construction from the conventional lithium secondary batteries except for that an electrode manufactured by mixing the above-mentioned active material as a main component with a binder such as Teflon or the like, and forming the resultant mixture by pressing is used as the negative electrode. Namely, a positive electrode is manufactured by using as a raw material oxides capable of intercalating lithium ions into the spaces in the crystalline structure thereof and deintercalating them from the spaces as vanadium oxides, manganese oxides, etc., such oxides containing lithium in the crystalline structures thereof and capable of deintercalating the lithium therefrom and intercalating it thereinto as lithiated cobalt oxides or manganese oxides with the spinel structure, or complex oxides thereof in which part of these Mn and Co thereof have been replaced by Fe, Ni, etc., or nitrides, etc.

As for the electrolyte, a non-aqueous organic electrolyte prepared by dissolving at least one kind of lithium salts in any kind of known organic solvents.

Next, specific embodying examples according to the present invention and comparative examples will be described below so as to clarify such effects that the negative electrode for the lithium secondary battery using the active material for the negative electrode according to the present invention brings about the excellent flatness of the electric potential and also decrease in the irreversible capacity, i.e., the capacity loss at the initial stage of charge and discharge cycles.

### Example 1

Crysanthemum flower like fluid carbon material powder having the layer structure and the turbostratic structure as shown in Fig. 1 obtained by graphitizing at a burning temperature of 2800°C fluid coke (product name F-2900) manufactured by Kansai Netsukagaku Kabushiki Kaisha (The Kansai Coke & Chemicals Co., Ltd.) and Teflon powder, ie., tetrafluoroethylene powder were mixed together in a ratio of 9 : 1 by weight to make a mixture for a negative electrode. The resultant mixture was then pressed to be formed in the shape of a disk, so that a working electrode was manufactured. On the other hand, as for a counter electrode, a small sized disk made of metallic lithium obtained by cutting it out in a predetermined size from a large sized sheet of metallic lithium was used. As for the electrolyte, there was used a non-aqueous organic solvent prepared by lithium hexafluoroborate salt (LiPF₆), in a mixture solvent prepared by mixing ethylene carbonate and diethyl carbonate in a ratio of 1 : 1 by volume, and thus there was manufactured a coin type cell of CR 2032 type in which the said working electrode as above was used as the positive electrode and the said counter electrode was used as the negative electrode. This cell is shown in Fig. 2. This cell is referred to as "test cell A".

In Fig. 2 numeral 1 denotes a cell container, 2 denotes the working electrode, 3 denotes the counter electrode, 4 denotes a separator, and 5 denotes an insulating sealing member.

### Comparative Example 1

A coin-type cell was manufactured in the same manner as in Example 1 except for that artificial graphite was used as an active material for the working electrode. This cell is referred to as "test cell B".

### Comparative Example 2

A coin-type cell was manufactured in the same manner as in Example 1 except for that the carbon material obtained by burning coal coke at 1200°C was used as an active material for the working electrode. This cell is referred to as "test cell C"

### Comparative Example 3

A coin-type cell was manufactured in the same manner as in Example 1 except for that the carbon material obtained by burning coal coke at 2500°C was used as an active material for the working electrode. This cell is referred to as "test cell D".

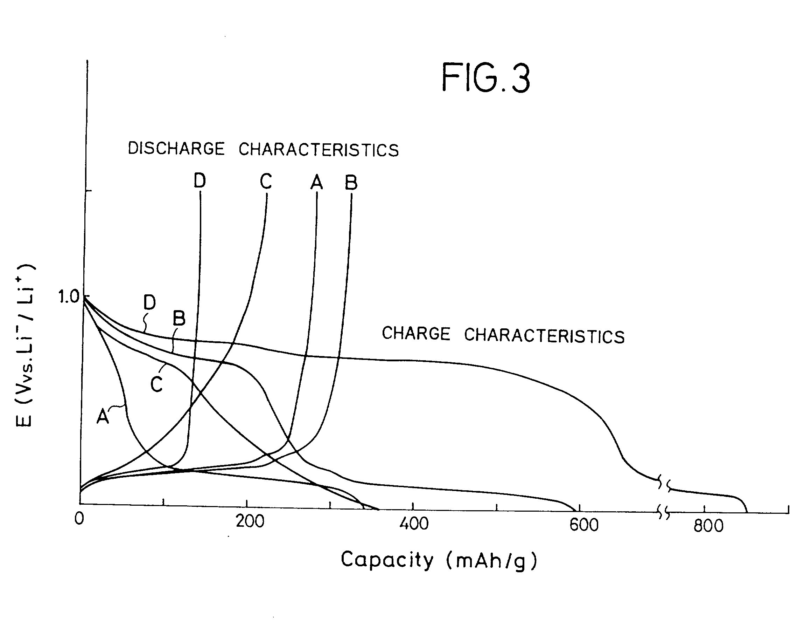

For each of these test cells A to D, one cycle of charging and discharging was carried out in such a condition that it was charged with a current density of 0.5 mA/cm² until an electric potential of the working electrode to lithium metal constituting the counter electrode became 0 volt and it was then discharged with the same current density as above until the electric potential of the working electrode to the counter electrode became 1.5 volt, and the initial charge and discharge characteristics of each of these test cells were evaluated. A result thereof is shown in the following Table 1 and Fig. 3. Fig. 3 shows the initial charge and discharge characteristics of the respective test cells at the first cycle.

**Table 1**

| | Charge capacity (mAh/g) | Discharge capacity (mAh/g) | Irreversible capacity (mAh/g) |
|---|---|---|---|
| Test cell A | 340 | 280 | 60 |
| Test cell B | 590 | 320 | 270 |
| Test cell C | 350 | 220 | 130 |
| Test cell D | 350 | 190 | 660 |

As is clear from Table 1 and Fig. 3, it is understood that the test cell A using the working electrode to this invention is very much smaller in the irreversible capacity, i.e., the capacity loss in the initial charge and discharge cycle, to bring about a more advantageous effect, as compared with the test cells B to D using the working electrodes comprising the active materials obtained by using the other kinds of materials as the raw material and graphitizing the same.

Furthermore, from Fig. 3 it is understood that the test cell A using the active material for the working electrode of this invention is so excellent in the flatness of the electric potential at the discharge time of the first charge and discharge cycle as the test cell B using the graphite as the active material for the working electrode and the test cell D using the resultant material obtained by burning the coal coke at high temperature, as the active material for the working electrode.

Furthermore, there were manufactured respective lithium secondary batteries which comprise negative electrodes using as a main component the foregoing respective active materials which have been used for the respective working electrodes, positive electrodes using as a main component an active material, such as lithiated cobalt oxides or the like and organic electrolytes, such as mentioned above. For these lithium secondary batteries, comparison tests for examining the respective initial charge and discharge characteristics therof were carried out. As a result, the initial charge and discharge characteristics which are similar to the results obtained with the above-mentioned Example 1 and Comparative Examples 1 to 3 were obtained.

Thus, it has been found that the lithium secondary battery according to the present invention is excellent in the flatness of the electrtic potential at the discharge time of the first cycle of the charge and discharge, and also is decreased in the irreversible capacity, i.e., the capacity loss at the first charge and discharge cycle.

Next, it will be clarified by the following comparison tests that in the case of subjecting the fluid coke to graphitization treatment by burning, the burning temperature is preferably more than 2000°C and, above all, more preferably, is more than 2500°C.

### Example 2

A coin-type cell was manufactured in the same manner as in Example 1 except for that carbon material obtained by fluid coke made by The Kansai Coke & Chemicals Co. Ltd., was graphitized at the burning temperature of 2500°C. This cell is referred to as "test cell E".

### Example 3

A coin-type cell was manufactured in the same manner as in Example 1 except for that carbon material obtained by fluid coke made by The Kansai Coke & Chemicals Co. Ltd., was graphitized at the burning temperature of 2000°C. This cell is referred to as "test cell F".

### Comparative Example 4

A coin-type cell was manufactured in the same manner as in Example 1 except for that carbon material obtained by fluid coke made by The Kansai Coke & Chemicals Co. Ltd., was graphitized at the burning temperature of 1500°C. This cell is referred to as "test cell G".

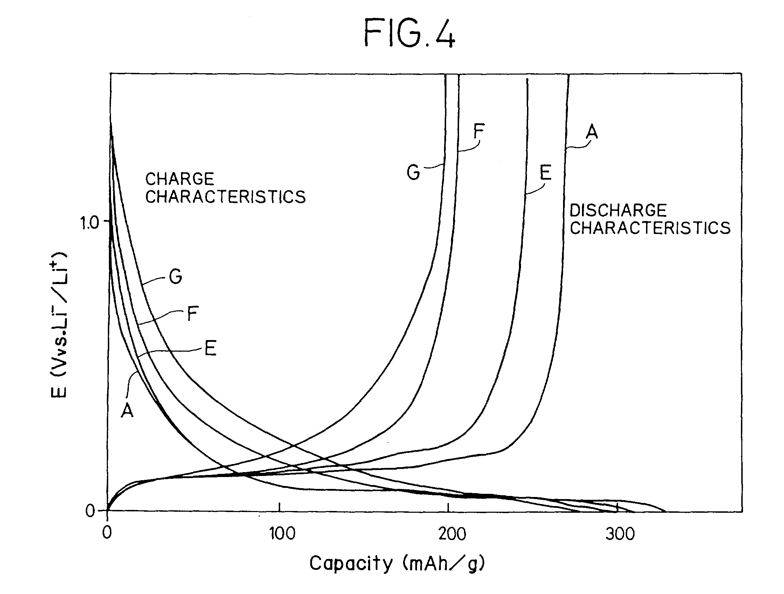

For each of these test cells E to G, one cycle of charging and discharging was carried out in such a condition that it was charged with a current density of 0.5 mA/cm² until an electric potential of the working electrode to lithium metal constituting the counter electrode became 0 volt and it was then discharged with the same current density as above until the electric potential of the working electrode to the counter electrode became 1.5 volt, and the initial charge and discharge characteristics of each of these test cells were evaluated. The results thereof are shown in the following Table 2 and Fig. 4. Fig. 4 shows the initial charge and discharge characteristics of the respective test cells at the first cycle.

**Table2**

| | Charge capacity (mAh/g) | Discharge capacity (mAh/g) | Irreversible capacity (mAh/g) |
|---|---|---|---|
| Test cell A | 340 | 280 | 60 |
| Test cell E | 315 | 250 | 65 |
| Test cell F | 268 | 200 | 68 |
| Test cell G | 280 | 200 | 80 |

As is clear from Table 2 and Fig. 4, it is understood that the test cells A, E and F using the active materials for the working electrodes obtained by graphitizing the fluid cokes at the burning temperatures of more than 2000°C is smaller in the irreversible capacity, i.e., the capacity loss in the initial charge and discharge cycle, and also is more excellent than the test cell G using the active material for the working electrode obtained by graphitizing the fluid coke at the burning temperature of less than 2000°C, and it is also understood that especially at the burning temperature of more than 2500°C both the effects for obtaining the excellent flatness of the electric potential and decreasing the capacity loss in the initial stage of the charge and discharge cycles are accelerated.

Furthermore, there were manufactured lithium secondary batteries which comprise negative electrodes using as a main component the foregoing respective active materials which have been used for the respective working electrodes. Positive electrodes using as a main component active materials such as lithiated cobalt oxides or the like and organic electrolytes, such as mentioned above. For these lithium secondary batteries, comparison tests for examining the respective initial charge and discharge characteristics thereof were carried out. As a result, the initial charge and discharge characteristics which are similar to the results obtained with the above-mentioned examples 1 to 3 and comparative example 4 were obtained.

Thus, it has been found that the lithium secondary battery is excellent in the flatness of the electric potential and is also decreased in the irreversible capacity, i.e., the capacity loss at the initial stage of the charge and discharge cycles.

### Industrial Applicability:

The lithium secondary battery using as the negative electrode thereof the active material for the negative electrode according to the present invention is applicable to a power source for the electronic instruments such as notebook personal computers, cordless telephones, portable telephones, etc.

## Claims

1. An active material for a negative electrode (3) for a lithium secondary battery, wherein said active material comprises carbon material composed of a layer structure (al) and a turbostratic structure (a2),
**characterized in that**
said carbon material is a graphitized carbon material having a chrysanthemum-like flower appearance.

2. A method of manufacturing an active material according to claim 1 for a negative electrode (3) for a lithium secondary battery,
**characterized in that**
said graphitized carbon material having said chrysanthemum-like flower appearance is obtained by subjecting fluid coke to a graphitization treatment.

3. A method according to claim 2,
**characterized in that**
said graphitized carbon material is obtained by subjecting said fluid coke to the graphitization treatment at a burning temperature of 2000°C or higher.

4. A method according to claim 3,
**characterized in that**
the burning temperature is 2500°C or higher.

5. A lithium secondary battery,
**characterized in that**
it comprises a negative electrode (3) comprising said active material according to claim 1.

6. A lithium secondary battery according to claim 5,
**charaterized in that**
it comprises a cell container (1) having an upper and a lower part to each of which is connected a working electrode (2) and a counter electrode (3), respectively, which upper and lower parts are connected via an insulating sealing member (5),
wherein between said working electrode (2) and said counter electrode (3) a separator (4) is arranged, and said counter electrode (3) is used as said negative electrode.

## Patentansprüche

1. Aktive Masse für eine negative Elektrode (3) einer Lithium-Sekundärbatterie. wobei die aktive Masse ein Kohlenstoffmaterial aufweist, welches aus einer Schichtenstruktur (a1) und einer turbostratischen Struktur (a2) zusammengesetzt ist,
**dadurch gekennzeichnet,**
daß das Kohlenstoffmaterial ein graphitgeglühtes Kohlenstoffmaterial mit einem Chrysanthemenblumen-artigen Aussehen ist.

2. Verfahren zum Herstellen einer aktiven Masse gemäß Anspruch 1 für eine negative Elektrode (3) einer Lithium-Sekundärbatterie,
**dadurch gekennzeichnet,**
daß das graphitgeglühte Kohlenstoffmaterial mit dem Chrysanthemenblumenartigen Aussehen dadurch gewonnen wird, daß Fließkoks einer Graphitisations-Behandlung unterzogen wird.

3. Verfahren nach Anspruch 2,
**dadurch gekennzeichnet,**
daß das graphitgeglühte Kohlenstoffmaterial dadurch gewonnen wird, daß der Fließkoks der Graphitisations-Behandlung bei einer Brenntemperatur von 2000°C oder höher unterzogen wird.

4. Verfahren nach Anspruch 3,
**dadurch gekennzeichnet,**
daß die Brenntemperatur 2500°C oder mehr beträgt.

5. Lithium-Sekundärbatterie,
**gekennzeichnet durch**
eine negative Elektrode (3) mit einer aktiven Masse gemäß Anspruch 1.

6. Lithium-Sekundärbatterie nach Anspruch 5,
**gekennzeichnet durch**
einen Zellenbehälter (1) mit einem oberen und einem unteren Teil, die mit einer Arbeitselektrode (2) bzw. mit einer Gegenelektrode (3) verbunden sind. wobei das obere und das untere Teil über ein isolierendes Dichtubgselement (5) miteinander verbunden sind und zwischen der Arbeitselektrode (2) und der Gegenelektrode (3) ein Trennelement (4) angeordnet ist und die Gegenelektrode (3) als die negative Elektrode verwendet wird.

## Revendications

1. Matériau actif pour électrode négative (3) d'une pile secondaire au lithium, matériau actif qui comprend du carbone comportant une structure en couches (al) et une structure turbostratique (a2), **caractérisé** en ce que ledit carbone est un carbone graphitisé ayant l'aspect d'une fleur de chrysanthème.

2. Procédé de préparation d'un matériau actif selon la revendication 1 pour électrode négative (3) d'une pile secondaire au lithium, **caractérisé** en ce que l'on obtient ledit carbone graphitisé ayant ledit aspect d'une fleur de chrysanthème en soumettant du coke fluide à un traitement de graphitisation.

3. Procédé selon la revendication 2, **caractérisé** en ce que l'on obtient ledit carbone graphitisé en soumettant ledit coke fluide au traitement de graphitisation à une température de combustion supérieure ou égale à 2000 °C.

4. Procédé selon la revendication 3, **caractérisé** en ce que la température de combustion est supérieure ou égale à 2500 °C.

5. Pile secondaire au lithium, **caractérisée** en ce qu'elle comporte une électrode négative (3) comprenant ledit matériau actif selon la revendication 1.

6. Pile secondaire au lithium selon la revendication 5, **caractérisée** en ce qu'elle comprend un récipient (1) pour la cellule, constitué d'une partie supérieure et d'une partie inférieure à chacune desquelles est fixée respectivement une électrode de travail (2) et une contre-électrode (3), les parties supérieure et inférieure étant reliées par un joint isolant (5), un séparateur (4) étant placé entre ladite électrode de travail (2) et ladite contre-électrode (3) et ladite contre-électrode (3) étant utilisée comme électrode négative.
